# NEW EUROPEAN PATENT SPECIFICATION

(11) **EP 0 324 218 B2**
(45) Date of publication and mention of the opposition decision: **23.10.1996**
(45) Mention of the grant of the patent: 19.08.1992
(21) Application number: 88300349.3
(22) Date of filing: 15.01.1988
(51) Int. Cl.: G01G 19/04, G01G 3/14

(54) **Weight sensing apparatus**
Vorrichtung zur Messung des Gewichts
Dispositif de détection de poids

(43) Date of publication of application: 19.07.1989
(73) Proprietor: Bolland, George Barry, Leamington Spa Warwickshire (GB)
(72) Inventor: Bolland, George Barry, Leamington Spa Warwickshire (GB)
(74) Representative: Leach, John Nigel

(56) References cited:
- CH-A- 587 473
- GB-A- 1 421 182
- GB-A- 2 194 065
- SU-A- 1 291 827
- US-A- 3 448 424
- US-A- 3 734 216
- US-A- 3 741 327
- PATENT ABSTRACTS OF JAPAN, vol. 7, no. 93 (P-192)[1238], 19th April 1983; & JP-A-58 19 515 (SUMITOMO KINZOKU KOGYO K.K.) 04-02-1983
- "Störeinflüsse bei der Querkraftmessung am Balken" Zur Erlangung des akademischen Grades eines Doktoringenieurs von der Fakultät für Elektrotechnik Universität Fridericiana Karlsruhe (Technische Hochschule), genehmigte Dissertation von Jörg Pühler aus Karlsruhe, Tag des Kolloquiums: 27.1.1986, Hauptreferent: Prof. Dr. rer.nat. H. Kronmüller, Korreferent: Prof. Dr.-Ing. E. Schnack, pages I, II, 1, 88 to 93

## Description

This invention relates to a weight sensing apparatus and method.

US-A-3,734,216 discloses a weight sensing apparatus comprising first and second support means, a load carrying member supported on said first and second support means, a sensing portion of the load carrying member being disposed between said support means and at least one further portion of the load carrying member which extends away from said sensing portion beyond an adjacent one of said first and second support means, a load receiving part provided on said sensing portion, first and second strain gauges, positioned on the sensing portion to sense the strain in said member to provide a signal resulting from load applied to the load receiving part.

US-A-3,734,216 states that the strain gauges must be positioned precisely at the inflection point and that this is difficult in practice since the position of the inflection points varies as the end movements acting on the rail vary. The US specification provides a special weigh rail which is isolated from the rest of the rail system to solve this problem.

The provision of a special weigh rail is inconvenient it requires the breaking of the existing rail and the laying of a special weigh rail section with special foundation and reinforcement.

An aim of the present invention is to provide a weight sensing apparatus for weighing railway guided vehicles and which does not require a special weigh rail and which is accurate and does not require precise positioning of the load.

This aim is achieved according to claim 1.

It is established in theory that to measure strain in a beam using a strain gauge, the strain gauge needs to be positioned further from the applied load and the support means than the distance d max. because closer to the load or either of the support means than distance d max. the strain is not symmetrically distributed through the beam and hence false readings can occur. However, it has been found that a practical weight sensing apparatus can use a strain gauge at or closer than distance d max. to the support means or the load because at least at a mid point of the thickness of the beam, the strain in the beam is approximately constant even at distances closer to the support means or the applied load than said distance d max., even though the strain is otherwise not symmetrically distributed through the beam.

For greatest accuracy, the strain gauge is provided intermediate a top and bottom of the rail preferably approximately mid-way, and the load is applied to the top of the rail.

Each of the first and second strain gauges may comprise two mutually inclined strain gauge elements arranged to detect strains in the rail in different directions which are transverse to the longitudinal axis of the rail and transverse to the direction in which the load is to be applied.

Thus the or each strain gauge may comprise what is known as a strain gauge rosette, having at least two strain gauge elements arranged to detect shear or other strain in the member in relative transverse directions.

The rail may be of constant or substantially constant cross-section throughout its length and the first and second strain gauges being on one side of the rail and two further strain gauges are positioned on the other side of the rail at positions which are aligned with the first and second strain gauges, each of said strain gauges comprises two strain gauge elements which are mutually inclined and arranged to sense strain in the rail in different directions which are transverse to the longitudinal axis of the rail and transverse to the direction in which the load is to be applied.

Each of the strain gauge elements may be connected in an electrical bridge circuit which detects changes in resistance of the strain gauge elements, as the load is applied to the member.

The invention is particularly applicable to an apparatus for sensing a wheel load of a railway guided vehicle such as a train.

Particularly with railways, the rails are supported along their length by many sleepers and two consecutive sleepers provide the first and second support means.

In order that the track can support the weight of a train, sleepers are generally not spaced further apart than about 600 mm, and the rails are typically about 150 mm thick (deep).

In order to use a pair of strain gauges in a conventional manner, it would be necessary to ensure that the wheel load is applied exactly half way between the sleepers so that each strain gauge is more than 150 mm (d max) from the applied load and from the sleepers. It will be appreciated that it is difficult to position a wheel of a train so exactly, and hence strain gauges have not hitherto been used to sense the weight of railway guided vehicles.

According to a second aspect of the invention 1 provide a method according to claim 6.

It will be appreciated that because in a method in accordance with the second aspect of the invention the strain gauge or gauges may be positioned closer to the sleepers than hitherto thought possible, the position of the wheel, the weight of which is to be sensed between the sleepers, is not so critical as it would be if the strain gauge or gauges were used conventionally.

By suitable calibration of the weight sensing apparatus, the invention may be used to actually determine the static or moving wheel load, although by using suitable logic and auxiliary electrical control means. the system may be used to detect for example, the speed of a railway guided vehicle, the direction in which the vehicle is travelling, or simply the presence of a said vehicle. Further, the distance between successive axles of a railway guided vehicle can be determined to give an indication as to the type of vehicle passing over the weight sensing apparatus.

To facilitate the system being used for all these operations, preferably a second rail of the track also has one or more, preferably two, strain gauges, again positioned in accordance with the method of the second aspect of the invention.

The respective strain gauges of the two rails may be aligned, but preferably are displaced relative to one another, longitudinally of the rails.

The electrical circuit to which all of the strain gauges or strain gauge elements are connected, may include an analogue to digital converter, so that the output from the various strain gauges or strain gauge elements of the apparatus may be fed directly to a computer.

The Invention will now be described with the aid of the accompanying drawings in which:
FIGURE 1 is a diagrammatic view of a beam with a load applied;
FIGURE 2a is a graph showing how shear strain varies throughout the depth of a beam as measured by a strain gauge positioned remote from the load:
FIGURE 2b is a graph similar to Figure 2a but showing how the shear strain varies throughout the beam depth as measured by a strain gauge positioned close to the load;
FIGURE 3 is a diagram of a weight sensing apparatus in accordance with the first aspect of the invention;
FIGURE 4 is a graph showing how shear strain is distributed through the depth of the beam of the apparatus of Figure 3, for the load in two alternative positions;
FIGURE 5 is an illustration of a typical electric circuit for connection to the strain gauges in the apparatus of Figure 3;
FIGURE 6 is a diagrammatic illustration of a railway track embodying the invention; and

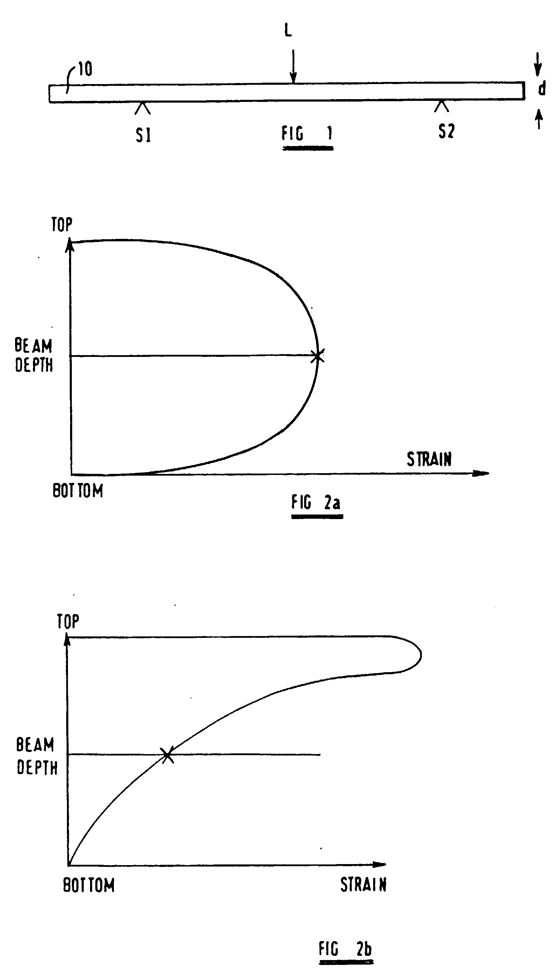

Referring first to Figure 1, a beam 10 is shown with a load L imposed upon it. The beam 10 is supported between a first support means S1 and a second support means S2, and the load L is imposed between the support means S1 and S2.

By using one or more strain gauges at different positions of the depth of the beam to determine how the shear strain caused by the applied load L, is distributed through the beam 10, a graph such as that shown in Figure 2a can be produced, provided that the strain gauge is always positioned remote from the load L, and from the support means S1 and S2.

It is established in theory that provided the strain gauge is not positioned longitudinally of the beam closer to the load L or either of the support means S1,S2 than a distance d equal to the depth or maximum depth of the beam 10, then the shear strain will be distributed symmetrically through the beam as indicated by the graph in Figure 2a.

If however a strain gauge is positioned longitudinally of the beam closer to the load L or to either of the support means S1 and S2 than the distance d, the bad is not distributed symmetrically through the beam 10. Rather, a graph such as shown in Figure 2b can be produced.

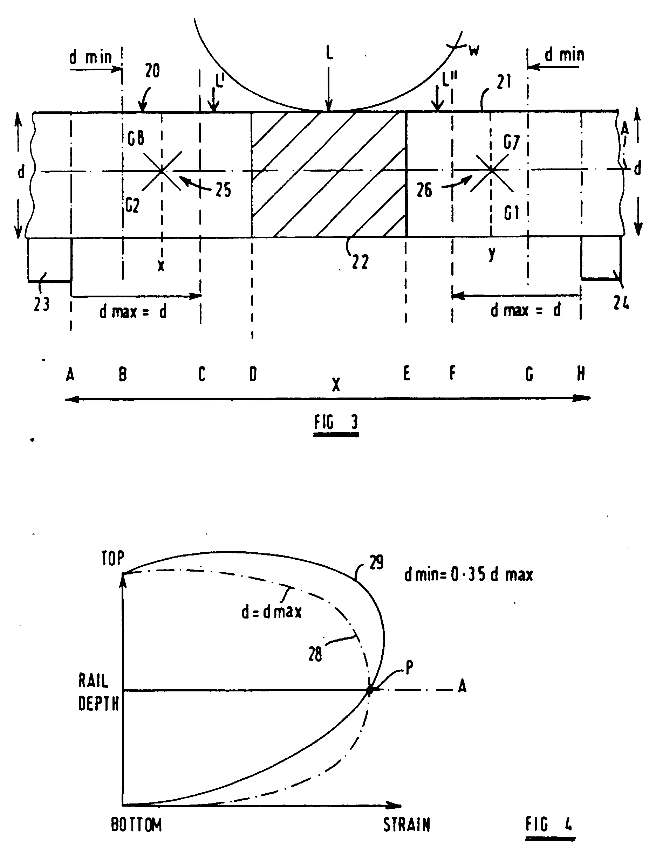

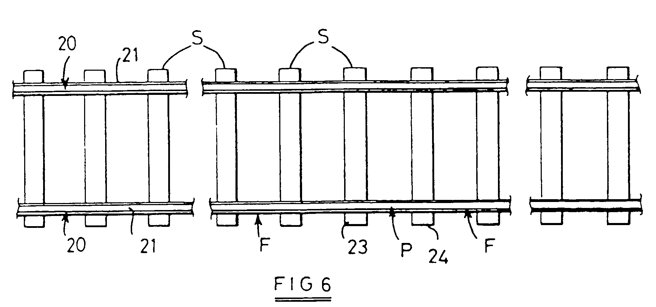

Referring to Figure 3 and 6, a section of a railway track is shown, comprising a pair of rails 20 each having a top surface 21 on which, in use, the wheels ol a railway guided vehicle run, and a lower surface 22. The rail 20, which may be a length of welded track or a discrete rail joined in conventional manner such as fish plates to another length of rail, is supported by a series of sleepers S. A portion of the rail between a first sleeper 23 which provides a first support means, and a second sleeper 24 which provides a second support means affords a sensing portion P. The remainder of the rail comprises end, further, portions F which extend away from the sensing portion beyond the adjacent sleeper 23 or 24.

Typically, the rail 20 has a thickness d of about 150 mm, and the sleepers 23 and 24 are spaced apart by a distance X of approximately 600 mm.

In order to give adequate support to a tracked vehicle as the vehicle moves over the rail 20, it is not possible readily to increase the distance between the sleepers 23 and 24 without increasing the depth d of the rail 20.

In order to sense the weight of a wheel w on the rail 20, a pair of strain gauges 25.26, are provided on the sensing portion P. Each strain gauge 25 and 26 comprises a strain gauge rosette, having two strain gauge elements.

Strain gauge rosette 25 has two strain gauge elements G2 and G8 arranged transverse to one another, and transverse to the longitudinal axis A of the rail 20, and also transverse to the direction in which the load L is applied.

Similarly, strain gauge rosette 26 has two strain gauge elements G7 and G1 again being arranged transverse to one another, and to the axis A, and to the direction of applied load L.

Hence the strain gauge elements G2, G8, G1 and G7, are arranged to sense shear strains which occur in the rail 20 due to the applied load L.

In accordance with the invention, the strain gauge 25 is positioned from the sleeper 23 a distance not greater than a distance d max. which is equal to the depth d of the rail 20. Further, strain gauge 25 is not positioned closer to sleeper 23 than a distance d min. where d min. is equal to 0.35 d max.

With the dimensions mentioned above, the range in which the strain gauge 25 may be positioned along the rail, so as to be at a distance from sleeper 23 than a distance not greater than d max. but not closer than d min., is shown between the indicator lines B and C, the line 8 being about 52.5 mm from the line A, which is the edge of the sleeper 23, and the line C being a distance of about 150 mm from line A.

Similarly, the strain gauge 26 may be positioned within the range shown between lines F and G where line F is 150 mm from line H which indicates the edge of sleeper 24 and line G is about 52.5 mm from line H.

With the strain gauges 25 and 26 positioned within these ranges, the load itself may be applied anywhere within a load receiving region provided that the load L is not applied closer to either of the strain gauges 25 and 26 than a distance equal to d min. i.e. 52.5 mm.

The lines D and E in Figure 3, show the load receiving region, i.e. the permitted range in which the load L may be applied, if the strain gauges 25 and 26 are both positioned at their outermost limits from their respective sleepers 23 and 24 i.e. along lines C and F respectively. In this example, the load may be applied anywhere over a range of 200 mm.

Of course, the strain gauges 25 and 26 can be moved closer to their respective sleepers 23 and 24 which would increase the range over which the load L may be applied.

In the arrangement shown, the strain gauges 25 and 26 are approximately 400 mm apart so that line x which shows the longitudinal position of strain gauge 25 is approximately 100 mm from sleeper 23, whilst line y which shows the longitudinal position of strain gauge 26, is approximately 100 mm from sleeper 24.

Thus the load may be applied anywhere between the lines L' and L" which are each approximately 152.5 mm from the respective sleepers 23 and 24.

Thus it will be appreciated that such an arrangement considerably facilitates the positioning of a wheel w for example to measure a static wheel load of the wheel w between two sleepers 23 and 24, using strain gauges.

Such an arrangement is possible because it has been found that the strain gauges 25 and 26 can be positioned closer to the sleepers 23,24, and the applied load L than hitherto thought possible.

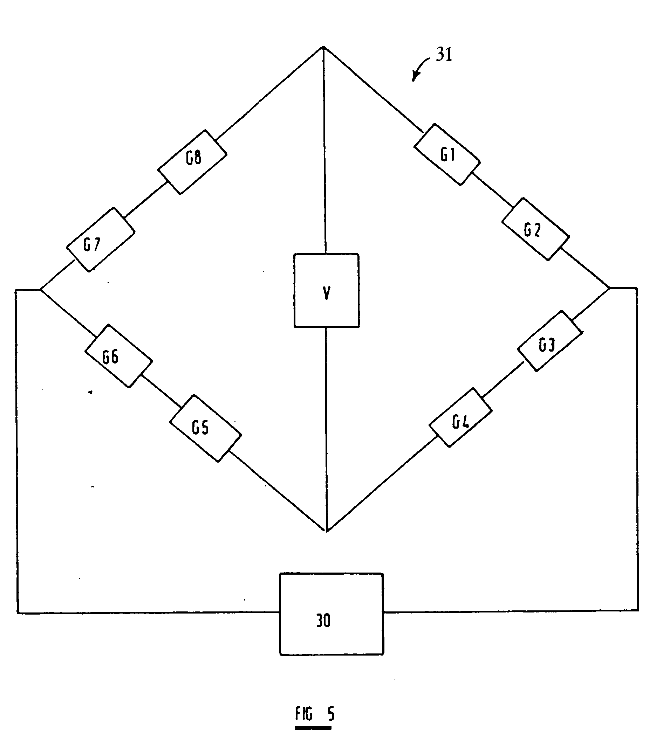

Referring to Figure 4, the distribution of the shear strain through the depth of the rail 20 is shown for the application of the load L at two alternative positions.

In a first extreme position, when the strain gauges 25 and 26 are each at least 150 mm from the applied load, and the strain gauges 25 and 26 are each at least 150 mm from their respective sleepers 23 and 24, i.e. the load L has to be applied at the position L shown, and the strain gauges 25,26, are positioned along lines C,F, the shear strain is symmetrically distributed through the rail 20 as shown by the chain dotted graph 28, in a similar manner to the graph of Figure 2a.

Where the strain gauges 25 and 26 are positioned closer to their respective sleepers 23 and 24, than 150 mm, for example at 52.5 mm from their respective sleepers 23,24, i.e. along lines B and G respectively, which is about the limit of the ranges in which the strain gauges 25 and 26 can be placed, and the load is applied between the strain gauges 25 and 26 at least 52.5mm from each of the strain gauges 25 and 26, a graph such as indicated by line 29 will be produced. It can be seen however that at a centre position of the rail 20, i.e. along axis A, that both the graphs 28 and 29 pass through a common point P and accordingly the strain at point P is substantially constant for the strain gauges 25 and 26 and the load L being positioned and applied within the ranges described. Hence, the arrangement shown in Figure 3 provides a practical weight sensor using strain gauges, for a rail of a track for a tracked vehicle. The actual position of common point P will depend on the shape of the rail cross section, and may not always coincide with the point of maximum shear strain as shown in the figure.

Referring now to Figure 5, a typical bridge circuit 31 is shown to which the strain gauge elements G2,G8,G1 and G7 can be connected. In Figure 3, the outside of rail 20 is shown. To increase the accuracy of the apparatus, for example to accommodate errors caused by rail twist of other extraneous causes, the inside of the rail would also be provided with strain gauge rosettes aligned with the strain gauge rosettes 25 and 26 and also comprising two strain gauge elements, the strain gauge element G3 being aligned with element G7, a strain gauge element G5 being aligned with G1, a strain gauge element G4, being aligned with G8, and a strain gauge element G6 being aligned with G2.

Hence the strain gauge elements G3,G4,G7, and G8, will sense any tension occurring in the rail 20, whilst strain gauge elements G1,G2,G5 and G6 will sense any compression in the rail 20.

By arranging the elements as shown in Figure 5, in a bridge circuit 31, when a voltage V is applied to the bridge, any change in the strain of the rail 20 can be detected by a control means 30. The control means may for example comprise an analogue to digital converter so that the signals produced can be fed direct to a suitably programmed computing means. Preferably, the resistances of the various arms of the bridge are adjusted so that when no load is applied to the rail 20, the bridge is balanced. In the event of a load being applied, with the strain gauge elements G1 to G8 arranged in a bridge circuit as shown in Figure 5, only loads applied in the vertical direction such as shown by lines L,L', and L" in Figure 3. will be detected.

By suitable calibration of the control means 30 and the bridge 31, the actual wheel load of a wheel w passing over the sensing apparatus can be determined.

However, by suitable adaption of the control means 30, the weight sensing apparatus can be used to fulfill other functions. In particular, preferably both rails of a track are provided with four strain gauge rosettes as described for rail 20, the strain gauge rosettes of the rails being displaced relative to one another. By providing suitable logic operators between a bridge circuit for rail 20 and the bridge circuit of the other rail, the system can be used to fulfill each of the following functions.
1. An indication of the direction in which the tracked vehicle is moving.
   This is achieved because the control means 30 can be arranged to sense the gradient of the load as an individual wheel of the vehicle passes over the rail section 20. For a train approaching from one direction, a positive gradient would be obtained, and for the train approaching in an opposite direction a negative gradient would be sensed.
2. The speed of the train can be sensed and a measure of the distance between the consecutive axles can be obtained.
   To achieve this, the time taken from the time a wheel load reaches a predetermined value and decreases to a predetermined value, would be sensed.This arrangement would operate where strain gauges are provided on one rail only.

Where strain gauges are displaced and provided on two rails, the average speed may be determined. The distance J between consecutive axles would be given by J equals Va T where Va is the average speed found by the sensing apparatus on the two rails, and T the time interval between consecutive axles passing the measuring section of one rail and then the other.

By knowing the distance between axles, the type of rail vehicle passing over the rail section 20 can be determined because for axle rolling stock for example where four axles are provided on a bogie, these are much closer together than those of two axle rolling stock.

Various modifications may be made without departing from the invention as claimed. For example, although as described, the strain gauges are resistance type strain gauges which may comprise a length of wire which is stretched and contracts in response to a strain, any other type of strain gauge may be used to detect the shear strain in the rail section in response to a applied load.

If desired, a control means may be provided including an analogue to digital converter so that the various signals from the strain gauge elements can be passed directly to a computer for manipulation by the software of the computer to give a desired readout.

Although in the above example the case of railway guided vehicle running on a railway track made of conventional welded track or made of relatively long discrete rails is described, the invention may be applied to a track made of shorter rails, for example down to rails spanning between four sleepers, two consecutive sleepers providing a first and second support between which a sensing portion of the rail extends and is provided with strain gauges positioned in relation to the first and second support means as hereinbefore described. Further parts of the rail extend away from the sensing portion at each end thereof.

The invention may be used to provide a weight sensing apparatus to sense the weight of any railway guided vehicle.

## Claims

1. A weight sensing apparatus comprising a rail, of a track (20) for a railway guided vehicle, which spans continuously between and is supported on at least four consecutive support means (S), a sensing portion (P) of the rail (20) being disposed between intermediate first and second of said support means (23,24) and further portions (F) of the rail extending away from said sensing portion (P) beyond an adjacent one of said first and second support means (23,24) and being supported by at least one further support means (S), the rail (20) being of constant or substantially constant thickness (d max.) throughout its length, a load receiving part (D-E) provided on said sensing portion (P), and first and second strain gauges (25,26), positioned on the sensing portion (P) to sense strain in said rail, whereby said first strain gauge (25) is positioned between the first support means (23) and the second support means (24) at a distance from the first support means (23) which is not greater than a distance d.max and not closer than 0.35 d.max and the second strain gauge (26) is positioned between the first support means (23) and the second support means (24) at a distance from the second support means (24) which is not greater than a distance d.max and not closer than 0.35 d.max whereby said load receiving part comprises an elongate load receiving region (D-E) which extends between a first position which is at a distance from the first strain gauge (25) which is not greater than d.max and not closer than 0.35 d.max and a second position which is at a distance from the second strain gauge (26) which is not greater than d.max and not closer than 0.35 d.max where d max. is the maximum thickness of the member between the first and second support means in the direction in which the load is to be applied, and the strain gauges being positioned between the top and bottom of the rail at a depth where the shear strain is substantially constant and arranged to sense shear strain in the rail.

2. Apparatus according to claim 1 wherein each of the first and second strain gauges (25,26) comprises two mutually inclined strain gauge elements (G2,G8,G1,G7) arranged to detect strains in the rail (20) in different directions which are transverse to the longitudinal axis of the rail (20) and transverse to the direction in which the load is to be applied.

3. Apparatus according to claim 1 wherein the rail is of constant or substantially constant cross-section throughout its length and the first and second strain gauges (25, 26) are on one side of the rail (20) and two further strain gauges are positioned on the other side of the rail (20) at positions which are aligned with the first and second strain gauges, each of said strain gauges comprises two strain gauge elements (G1-G8) which are mutually inclined and arranged to sense strain in the rail (20) in different directions which are transverse to the longitudinal axis of the rail (20) and transverse to the direction in which the load is to be applied.

4. Apparatus according to claim 3 wherein each of the strain gauge elements (G1-G8) is connected in an electrical bridge circuit (31) to detect changes in resistance of the strain gauge elements, as a load is applied to the elongate load receiving region (D-E) whereby the weight of the load may be determined.

5. Apparatus according to any one of the preceding claims wherein on a second, parallel rail of the track two strain gauges are positioned and wherein the respective strain gauges of the two rails are displaced relative to one another, longitudinally of the rails.

6. A method of sensing the weight to be imposed by a railway guided vehicle on a rail, of a track (20) for a railway guided vehicle, which spans continuously between and is supported on at least four consecutive support means (S), a sensing portion (P) of the rail (20) being disposed between intermediate first and second of said support means (23,24) and further portions (F) of the rail extending away from said sensing portion (P) beyond an adjacent one of said first and second support means (23,24) and being supported by at least one further support means (S), the rail (20) being of constant or substantially constant thickness (d max.) throughout its length, and a load receiving part (D-E) provided on said sensing portion (P), and first and second strain gauges (25,26), positioned on the sensing portion (P) to sense strain in said rail comprising the steps of determining the maximum thickness, d max., in the direction in which load is to be applied of the rail (20) between the support means (23,34), measuring a distance from said first support means (23) which is not greater than the distance d.max and not closer than 0.35 d.max, and positioning the first strain gauge (25) on said rail (20) at said measured distance whilst said rail (20) remains in situ, measuring a distance from said second support means (24) which is not greater than the distance d.max and not closer than 0.35 d.max and positioning the second strain gauge (26) on said rail (20) at said measured distance whilst said rail (20) remains in situ whereby said load receiving part comprises an elongate load receiving region which extends between a position which is at a distance not greater than the distance d.max and not closer than 0.35 d.max from the first strain gauge (25) and a position which is at a distance not greater than the distance d.max and not closer than 0.35 d.max from the second strain gauge (26) the strain gauges being positioned between the top and bottom of the rail at a depth where the shear strain is substantially constant and arranged to sense shear strain in the rail and providing means to connect the strain gauges (25,26) in an electrical circuit (31) whereby, in use, the weight of a load, applied to said elongate load receiving region (D-E), may be determined.

7. A method according to claim 6 wherein each of the first and second strain gauges (25,26) comprises two mutually inclined strain gauge elements (G2,G8,G1,G7) arranged to detect strains in the rail (20) in different directions which are transverse to the longitudinal axis of the rail (20) and transverse to the direction in which the load is to be applied.

8. A method according to claim 6 wherein the rail is of constant or substantially constant cross-section throughout its length and the first and second strain gauges (25, 26) are on one side of the rail (20) and two further strain gauges are positioned on the other side of the rail (20) at positions which are aligned with the first and second strain gauges, each of said strain gauges comprises two strain gauge elements (G1-G8) which are mutually inclined and arranged to sense strain in the rail (20) in different directions which are transverse to the longitudinal axis of the rail (20) and transverse to the direction in which the load is to be applied.

9. A method according to claim 8 wherein each of the strain gauge elements (G1-G8) is connected in an electrical bridge circuit (31) to detect changes in resistance of the strain gauge elements, as a load is applied to the elongate load receiving region (D-E) whereby the weight of the load may be determined.

10. A method according to any one of claims 6 to 9 wherein on a second, parallel rail of the track two strain gauges are positioned and wherein the respective strain gauges of the two rails are displaced relative to one another, longitudinally of the rails.

## Patentansprüche

1. Eine Gewichtsmeßvorrichtung mit einer Schiene eines Gleises (20) für ein schienengeführtes Fahrzeug, die sich kontinuierlich über wenigstens vier aufeinanderfolgende Stützelemente (S) erstreckt und von diesen getragen wird, einem Meßabschnitt (P) der Schiene (20), der mittig zwischen dem ersten und dem zweiten Stützelement (23, 24) angeordnet ist, wobei sich weitere Abschnitte (F) der Schiene weg von dem Meßabschnitt (P) über einen benachbarten des ersten und des zweiten Stützmittels (23, 24) erstreckt und durch wenigstens ein weiteres Stützmittel (S) getragen wird, wobei die Schiene (20) über seine Länge eine konstante oder aber im wesentlichen konstante Dicke (d max.) hat, mit einem Lastaufnahmeabschnitt (D-E), der an dem Meßabschnitt (P) vorgesehen ist, und ersten und zweiten Dehnungsmeßeinrichtungen (25, 26), die an dem Meßabschnitt (P) positioniert sind, um die Spannung in der Schiene zu messen, wobei der erste Dehnungsmeßstreifen (25) zwischen dem ersten Stützmittel (23) und dem zweiten Stützmittel (24) unter einem Abstand von dem ersten Stützmittel (23) angeordnet ist, der nicht größer als ein Abstand d.max und nicht geringer als 0,35 d.max ist, und die zweite Dehnungsmeßeinrichtung (26) zwischen dem ersten Stützmittel (23) und dem zweiten Stützmittel (24) mit einem Abstand von dem zweiten Stützmittel (24) positioniert ist, der nicht größer als d.max und nicht geringer als 0,35 d.max ist, wobei der die Last aufnehmende Teil einen länglichen Lastaufnahmebereich (D-E) hat, der sich zwischen der ersten Position erstreckt, die von der ersten Dehnungsmeßeinrichtung (25) einen Abstand hat, der nicht größer als d.max und nicht geringer als 0,35 d.max ist, und einer zweiten Position, die von der zweiten Dehnungsmeßeinrichtung (26) einen Abstand hat, der nicht größer als d.max und nicht geringer als 0,35 d.max ist, wobei d.max die maximale Dicke des Elements zwischen dem ersten und dem zweiten Stützelement in der Richtung, in der die Last aufgebracht wird, ist, und die Dehnungsmeßeinrichtungen zwischen der Oberseite und der Unterseite auf einer Tiefe, bei der die Scherspannung im wesentlichen konstant ist, angeordnet ist, um die Scherspannung in der Schiene zu messen.

2. Vorrichtung nach Anspruch 1, wobei die erste und die zweite Dehnungsmeßeinrichtung (25, 26) zwei zueinander geneigt angeordnete Dehnungsmeßelemente (G2, G8, G1, G7) aufweist, die angeordnet sind, um Spannungen in der Schiene (20) in unterschiedlichen Richtungen zu messen, die quer zu der Längsachse der Schiene (20) und quer zu der Richtung, in der die Last aufzubringen ist, verlaufen.

3. Vorrichtung nach Anspruch 1, wobei die Schiene über ihre Länge einen konstanten oder einen im wesentlichen konstanten Querschnitt hat und die erste und die zweite Dehnungsmeßeinrichtung (25, 26) auf einer Seite der Schiene (20) sind, und weiter zwei Dehnungsmeßeinrichtungen auf der anderen Seite der Schiene (20) an Positionen angeordnet sind, die mit der ersten und der zweiten Dehnungsmeßeinrichtung ausgerichtet sind, wobei jede der Dehnungsmeßeinrichtungen zwei Dehnungsmeßelemente (G1-G8) aufweisen, die zueinander geneigt und zum Messen der Spannung in der Schiene (20) in unterschiedlichen Richtungen angeordnet sind, wobei die Richtungen quer zu der Längsachse der Schiene (20) und quer zu der Richtung, in der die Last aufgebracht wird, verlaufen.

4. Vorrichtung nach Anspruch 3, wobei jedes der Dehnungsmeßelemente (G1-G8) in einer elektrischen Brückenschaltung (31) verbunden ist, um Änderungen in dem Widerstand der Dehnungsmeßelemente zu erkennen, wenn eine Last auf den sich erstreckenden Lastaufnahmebereich (D-E) aufgebracht wird, wodurch das Gewicht der Last bestimmt werden kann.

5. Vorrichtung nach einem der vorangehenden Ansprüche, wobei auf einem zweiten, parallelen Schienenstrang zwei Dehnungsmeßeinrichtungen positioniert sind und wobei die jeweiligen Dehnungsmeßeinrichtungen der beiden Schienen relativ zueinander in Längsrichtung der Schienen angeordnet sind.

6. Ein Verfahren zum Messen des Gewichts, das von einem schienengeführten Fahrzeug auf eine Schiene eines Gleises (20) für schienengeführte Fahrzeuge aufgebracht wird, wobei sich die Schiene kontinuierlich zwischen wenigstens vier aufeinander folgende Stützmittel (S) erstreckt und von diesen getragen wird, wobei ein Meßabschnitt (25) der Schiene (20) mittig zwischen dem ersten und dem zweiten Stützmittel (23, 24) angeordnet ist und sich weitere Abschnitte (F) der Schiene weg von dem Meßabschnitt (P) über ein benachbartes der ersten und zweiten Stützmittel (23, 24) erstrecken und durch wenigstens ein weiteres Stützmittel (S) getragen werden, wobei die Schiene (20) über ihre Länge von gleichbleibender oder im wesentlichen gleichbleibender Dicke (d.max) ist und ein die Last aufnehmender Teil (D-E), der an dem Meßabschnitt (P) vorgesehen ist, und erste und zweite Dehnungsmeßeinrichtungen (25, 26) an dem Meßabschnitt (P) angeordnet sind, um die Spannung in der Schiene zu messen, mit den Schritten des Bestimmens der maximalen Dicke d.max in der Richtung, in der die Last auf die Schiene (20) zwischen den Stützelementen (23, 24) aufgebracht wird, Messen eines Abstands des ersten Stützmittels (23), der nicht größer als der Abstand d.max und nicht geringer als 0,35 d.max ist, und Positionieren der ersten Dehnungsmeßeinrichtung (25) der Schiene (20) an dem gemessenen Abstand, während die Schiene (20) an Ort und Stelle bleibt, Messen eines Abstands von dem zweiten Stützmittel (24), der nicht größer als der Abstand d.max und nicht geringer als 0,35 d.max ist, und Positionieren der zweiten Dehnungsmeßeinrichtung (26) auf der Schiene (20) unter dem gemessenen Abstand, während die Schiene (20) an Ort und Stelle bleibt, wobei der die Last aufnehmende Teil einen länglichen Lastaufnahmebereich aufweist, der sich zwischen einer Position erstreckt, die einen Abstand hat, der nicht größer als der Abstand d.max und nicht kleiner als 0,35 d.max von dem ersten Dehnungsmeßstreifen (25) und einer Position, die einen Abstand hat, der nicht größer als der Abstand d.max und nicht kleiner als 0,35 d.max von der zweiten Dehnungsmeßeinrichtung (26) ist, hat, wobei die Dehnungsmeßeinrichtungen zwischen der Oberseite und der Unterseite der Schiene auf einer Tiefe angeordnet sind, an der die Scherspannung im wesentlichen konstant ist und so angeordnet sind, um die Scherspannung in der Schiene zu messen und unter Bereitstellung von Mitteln zum Verbinden der Dehnungsmeßeinrichtungen (25, 26) in einer elektrischen Schaltung (31), wodurch bei Verwendung das Gewicht der Last, die auf den länglichen Lastaufnahmebereich (D-E) aufgebracht wird, gemessen werden kann.

7. Ein Verfahren nach Anspruch 6, wobei die erste und die zweite Dehnungsmeßeinrichtung (25, 26) zwei zueinander geneigte Dehnungsmeßelemente (G2, G8, G1, G7) aufweist, die angeordnet sind, um Spannungen in der Schiene (20) in unterschiedlichen Richtungen zu messen, die quer zu der Längsachse der Schiene (20) und quer zu der Richtung, in der die Last aufzubringen ist, verlaufen.

8. Ein Verfahren nach Anspruch 6, wobei die Schiene über ihre Länge einen konstanten oder einen im wesentlichen konstanten Querschnitt hat und die erste und die zweite Dehnungsmeßeinrichtung (25, 26) auf einer Seite der Schiene (20) sind, und weiter zwei Dehnungsmeßeinrichtungen auf der anderen Seite der Schiene (20) an Positionen angeordnet sind, die mit der ersten und der zweiten Dehnungsmeßeinrichtung ausgerichtet sind, wobei jede der Dehnungsmeßeinrichtungen zwei Dehnungsmeßelemente (G1-G8) aufweist, die zueinander geneigt und zum Messen der Spannung in der Schiene (20) in unterschiedlichen Richtungen angeordnet sind, wobei die Richtungen quer zu der Längsachse der Schiene (20) und quer zu der Richtung, in der die Last aufgebracht wird, verlaufen.

9. Ein Verfahren nach Anspruch 8, wobei jedes der Dehnungsmeßelemente (G1-G8) in einer elektrischen Brückenschaltung (31) verbunden ist, um Änderungen in dem Widerstand der Dehnungsmeßelemente zu erkennen, wenn eine Last auf den sich erstreckenden Lastaufnahmebereich (D-E) aufgebracht wird, wodurch das Gewicht der Last bestimmt werden kann.

10. Ein Verfahren nach einem der Ansprüche 6 bis 9, wobei auf einem zweiten, parallelen Schienenstrang zwei Dehnungsmeßeinrichtungen positioniert sind und wobei die jeweiligen Dehnungsmeßeinrichtungen der beiden Schienen relativ zueinander in Längsrichtung der Schienen angeordnet sind.

## Revendications

1. Appareil de détection de poids comprenant un rail, d'une voie (20) pour un véhicule guidé par chemin de fer, qui s'étend de façon continue entre et repose sur au moins quatre moyens de support consécutifs (S), une partie de détection (P) du rail (20) étant disposée entre les premier et deuxième moyens de support intermédiaires desdits moyens de support (23, 24) et d'autres parties (F) du rail se prolongeant loin de ladite partie de détection (P) au-delà d'un desdits premier et deuxième moyens de support adjacent (23, 24) et reposant sur au moins un autre moyen de support (S), le rail (20) étant d'épaisseur constante ou sensiblement constante (d max) sur toute sa longueur, une pièce recevant une charge (D-E) fournie sur ladite partie de détection (P), et une première et une deuxième jauges de contrainte (25, 26) positionnées sur la partie de détection (P) afin de détecter la contrainte dans ledit rail, grâce auquel ladite première jauge de contrainte (25) est positionnée entre le premier moyen de support (23) et le deuxième moyen de support (24) à une distance du premier moyen de support (23) qui n'est pas supérieure à une distance d max. et pas inférieure à 0,35 d max. et la seconde jauge de contrainte (26) est positionnée entre le premier moyen de support (23) et le deuxième moyen de support (24) à une distance du deuxième moyen de support (24) qui n'est pas supérieure à une distance d max. et pas inférieure à 0,35 d max., grâce à laquelle ladite pièce recevant la charge comprend une région allongée recevant la charge (D-E) qui s'étend entre une première position qui est à une distance de la première jauge de contrainte (25) qui n'est pas supérieure à une distance d max. et pas inférieure à 0,35 d max., et une seconde position qui est à une distance de la seconde jauge de contrainte (26) qui n'est pas supérieure à une distance d max. et pas inférieure à 0,35 d max. où d max. est l'épaisseur maximum de l'élément séparant le premier et le deuxième moyens de support dans le sens dans lequel la charge doit être appliquée, les jauges de contrainte étant positionnées entre le haut et le bas du rail à une profondeur où la contrainte de cisaillement est sensiblement constante et disposées de façon à détecter la contrainte de cisaillement dans le rail.

2. Appareil selon la revendication 1, dans lequel chacune des première et seconde jauges de contrainte (25, 26) comprend deux éléments de jauge de contrainte inclinés l'un par rapport à l'autre (G2, G8, G1, G7), disposés de façon à déceler les contraintes dans le rail (20) dans des sens différents qui sont transversaux par rapport à l'axe longitudinal du rail (20) et transversaux par rapport au sens dans lequel la charge doit être appliquée.

3. Appareil selon la revendication 1, dans lequel le rail a une section transversale constante ou sensiblement constante sur toute sa longueur et dans lequel les première et seconde jauges de contrainte (25, 26) se trouvent sur un côté du rail (20) et dans lequel deux autres jauges de contrainte sont positionnées de l'autre côté du rail (20) en des positions qui sont alignées avec les première et seconde jauges de contrainte, dans lequel chacune desdites jauges de contrainte comprend deux éléments de jauge de contrainte (G1-G8) qui sont inclinés l'un par rapport à l'autre et disposés de façon à détecter les contraintes dans le rail (20) dans des sens différents qui sont transversaux par rapport à l'axe longitudinal du rail (20) et transversaux par rapport au sens dans lequel la charge doit être appliquée.

4. Appareil selon la revendication 3, dans lequel chacun des éléments de jauge de contrainte (G1-G8) est raccordé à un circuit de pont électrique (31) afin de déceler les modifications de la résistance des éléments de jauge de contrainte, alors qu'une charge est appliquée sur la région allongée recevant la charge (D-E) grâce à laquelle la charge peut être déterminée.

5. Appareil selon l'une quelconque des revendications précédentes, dans lequel deux jauges de contraintes sont positionnées sur un second rail parallèle de la voie et dans lequel les jauges de contraintes respectives des deux rails sont déplacées l'une par rapport à l'autre dans le sens longitudinal des rails.

6. Procédé de détection du poids qui sera imposé par un véhicule guidé par chemin de fer sur une voie (20) pour un véhicule guidé par chemin de fer, qui s'étend de façon continue entre et repose sur au moins quatre moyens de support consécutifs (S), une partie de détection (P) du rail (20) étant disposée entre les premier et deuxième moyens de supports intermédiaires desdits moyens de support (23, 24) et d'autres parties (F) du rail se prolongeant loin de ladite partie de détection (P) au-delà d'un desdits premier et deuxième moyens de support adjacent (23, 24) et reposant sur au moins un autre moyen de support (S), le rail (20) étant d'épaisseur constante ou sensiblement constante (d max) sur toute sa longueur, une pièce recevant une charge (D-E) fournie sur ladite partie de détection (P), et une première et une deuxième jauges de contrainte (25, 26) positionnées sur la partie de détection (P) afin de détecter la contrainte dans ledit rail, comprenant les étapes de détermination de l'épaisseur maximum, d max., dans le sens dans lequel la charge doit être appliquée sur le rail (20) entre les moyens de support (23, 24), de mesure une distance à partir dudit premier moyen de support (23) qui n'est pas supérieure à une distance d max. et pas inférieure à 0,35 d max. et de positionnement la première jauge de contrainte (25) sur ledit rail (20) à ladite distance mesurée tandis que ledit rail (20) reste sur place, de mesure d'une distance à partir dudit second moyen de support (24) qui n'est pas supérieure à une distance d max. et pas inférieure à 0,35 d max. et de positionnement de la seconde jauge de contrainte (26) sur ledit rail (20) à une dite distance mesurée tandis que ledit rail (20) reste sur place, grâce à laquelle ladite pièce recevant la charge comprend une région allongée recevant la charge qui s'étend entre une position qui est à une distance de la première jauge de contrainte (25) qui n'est pas supérieure à une distance d max. et pas inférieure à 0,35 d max., et une position qui est à une distance de la seconde jauge de contrainte (26) qui n'est pas supérieure à une distance d max. et pas inférieure à 0,35 d max., les jauges de contraintes étant disposées entre le haut et le bas du rail à une profondeur où la contrainte de cisaillement est sensiblement constante et disposées de façon à détecter la contrainte de cisaillement dans le rail et fournissant un moyen permettant de raccorder les jauges de contrainte (25, 26) sur un circuit électrique (31), grâce auquel, lors de son utilisation, le poids de la charge appliquée sur ladite région allongée recevant la charge (D-E) peut être déterminée.

7. Procédé selon la revendication 6, dans lequel chacune des première et seconde jauges de contrainte (25, 26) comprend deux éléments de jauge de contrainte inclinés l'un par rapport à l'autre (G2, G8, G1, G7), disposés de façon à déceler les contraintes dans le rail (20) dans des sens différents qui sont transversaux par rapport à l'axe longitudinal du rail (20) et transversaux par rapport au sens dans lequel la charge doit être appliquée.

8. Procédé selon la revendication 6, dans lequel le rail a une section transversale constante ou sensiblement constante sur toute sa longueur et dans lequel les première et seconde jauges de contrainte (25, 26) se trouvent sur un côté du rail (20) et dans lequel deux autres jauges de contrainte sont positionnées de l'autre côté du rail (20) en des positions qui sont alignées avec les première et seconde jauges de contrainte, dans lequel chacune desdites jauges de contrainte comprend deux éléments de jauge de contrainte (G1-G8) qui sont inclinés l'un par rapport à l'autre et disposés de façon à détecter les contraintes dans le rail (20) dans des sens différents qui sont transversaux par rapport à l'axe longitudinal du rail (20) et transversaux par rapport au sens dans lequel la charge doit être appliquée.

9. Procédé selon la revendication 8, dans lequel chacun des éléments de jauge de contrainte (G1-G8) est raccordé à un circuit de pont électrique (31) afin de déceler les modifications de la résistance des éléments de jauge de contrainte, alors qu'une charge est appliquée sur la région allongée recevant la charge (D-E) grâce à laquelle la charge peut être déterminée.

10. Procédé selon l'une quelconque des revendications 6 à 9, dans lequel deux jauges de contraintes sont positionnées sur un second rail parallèle de la voie et dans lequel les jauges de contraintes respectives des deux rails sont déplacées l'une par rapport à l'autre dans le sens longitudinal des rails.
